# EUROPEAN PATENT APPLICATION

(11) **EP 4 579 984 A1**
(43) Date of publication of application: **02.07.2025**
(21) Application number: 22959397.5
(22) Date of filing: 24.11.2022
(51) Int. Cl.: H02J 3/38

(54) **PHOTOVOLTAIC POWER SUPPLY SYSTEM AND VOLTAGE CONTROL METHOD THEREFOR, CONTROLLER, AND STORAGE MEDIUM**

(30) Priority: 23.09.2022 CN 202211163932
(71) Applicant: GD Midea Air-Conditioning Equipment Co., Ltd., Foshan, Guangdong 528311 (CN)
(72) Inventor: ZENG, Xianjie, Foshan, Guangdong 528311 (CN); HUANG, Zhaobin, Foshan, Guangdong 528311 (CN); JIANG, Haihao, Foshan, Guangdong 528311 (CN); QIU, Yu, Foshan, Guangdong 528311 (CN)
(74) Representative: Ran, Handong
(86) International application number: PCT/CN2022/134087
(87) International publication number: WO 2024/060397

(57) **Abstract**

A photovoltaic power supply system and a voltage control method therefor, a controller, and a storage medium. The photovoltaic power supply system comprises an inverter (400) and at least one photovoltaic input device (200); each photovoltaic input device (200) comprises a photovoltaic cell (210) and a direct-current converter (220); the photovoltaic cells (210) are connected to a power supply grid by means of the direct-current converters (220), a bus (300), and the inverter (400) in sequence. The voltage control method comprises: acquiring a grid voltage of a power supply grid and a target power tracking voltage of all photovoltaic cells (S100); determining a target given voltage of a bus according to the grid voltage and the target power tracking voltage (S200); and controlling the working state of direct-current converters according to the target given voltage (S300). The system can reduce converter losses, thereby improving system efficiency, and the system can operate in a required steady state under different conditions.

## Description

### CROSS-REFERENCE TO RELATED APPLICATIONS

This application claims priority to a Chinese patent application entitled "PHOTOVOLTAIC POWER SUPPLY SYSTEM, VOLTAGE CONTROL METHOD THEREOF, CONTROLLER, AND STORAGE MEDIUM" filed on September 23, 2022 with Application No. 202211163932.9, the disclosure of which is incorporated herein by reference in its entirety.

### TECHNICAL FIELD

The present application relates to the technical field of photovoltaic power generation, in particular to a photovoltaic power supply system, a voltage control method thereof, a controller, and a storage medium.

### BACKGROUND

At present, for photovoltaic power supply systems, the stability of energy flow can be achieved by stabilizing a voltage of a busbar. A stable voltage of the busbar signifies that the energy inflow and outflow of the system are balanced, so it is essential to control the voltage of the busbar in photovoltaic power supply systems. Nevertheless, because the desired voltage of the busbar for maintaining the system in its optimal steady state differs under various conditions, and the current designated voltage of the busbar is just a constant, the system cannot run in an optimal state.

### SUMMARY

The present application aims to solve at least one of the technical problems existing in the prior art. In view of this, the present application provides a photovoltaic power supply system, a voltage control method thereof, a controller, and a storage medium, enabling the system to operate in the desired steady state under various conditions.

In accordance with a first aspect of the present application, an embodiment provides a voltage control method of a photovoltaic power supply system. The photovoltaic power supply system includes an inverter and at least one photovoltaic input apparatus. Each photovoltaic input apparatus includes a photovoltaic cell and a DC converter. The photovoltaic cell is connected to an input side of the inverter through the DC converter and a busbar sequentially, and an output side of the inverter is intended for connection to a power grid. The voltage control method includes: acquiring a grid voltage of the power grid and a target power tracking voltage of each of all the photovoltaic cells; determining a target given voltage of the busbar according to the grid voltage and the target power tracking voltage; and controlling an operating state of the DC converter according to the target given voltage.

According to some embodiments of the present application, determining a target given voltage of the busbar according to the grid voltage and the target power tracking voltage includes: determining a preset given voltage of the busbar according to the grid voltage; and determining the target given voltage of the busbar according to the preset given voltage and the target power tracking voltage.

According to some embodiments of the present application, the grid voltage includes a peak grid voltage; and determining a preset given voltage of the busbar according to the grid voltage includes: performing a superposition calculation on the peak grid voltage and a preset compensation voltage to obtain the preset given voltage.

According to some embodiments of the present application, determining the target given voltage of the busbar according to the preset given voltage and the target power tracking voltage includes at least one of:
in response to all of the target power tracking voltages being less than the preset given voltage, taking the preset given voltage as the target given voltage of the busbar; or
in response to at least one of the target power tracking voltages being greater than or equal to the preset given voltage, taking the target power tracking voltage with the largest value as the target given voltage of the busbar.

According to some embodiments of the present application, in response to all of the target power tracking voltages being less than the preset given voltage, controlling an operating state of the DC converter according to the target given voltage includes: controlling the DC converter to be in an operational state for each of the photovoltaic input apparatuses.

According to some embodiments of the present application, in response to at least one of the target power tracking voltages being greater than or equal to the preset given voltage, controlling an operating state of the DC converter according to the target given voltage includes at least one of:
controlling the DC converter to be in an operational state for the photovoltaic input apparatus where the target power tracking voltage is less than the preset given voltage;
controlling the DC converter to be in an off state for the photovoltaic input apparatus where the target power tracking voltage is equal to the target given voltage; or
calculating a difference between the target given voltage and the target power tracking voltage, and controlling the operating state of the DC converter according to the difference for the photovoltaic input apparatus where the target power tracking voltage is greater than or equal to the preset given voltage and less than the target given voltage.

According to some embodiments of the present application, in response to controlling an operating state of the DC converter according to the target given voltage including controlling the operating state of the DC converter according to the difference, controlling the operating state of the DC converter according to the difference includes at least one of:
in response to the difference being less than a preset value, controlling the DC converter to be in an off state; or
in response to the difference being greater than or equal to the preset value, controlling the DC converter to be in an operational state.

According to some embodiments of the present application, the target power tracking voltage is a current maximum power tracking voltage of the photovoltaic cell.

According to some embodiments of the present application, an acquisition of the maximum power tracking voltage includes: acquiring a current environmental parameter of a location of the photovoltaic cell; and determining the current maximum power tracking voltage of the photovoltaic cell according to the current environmental parameter.

In accordance with a second aspect of the present application, an embodiment provides a controller, including: a memory, a processor, and a computer program stored in the memory and operable on the processor. The processor, when executing the computer program, implements the voltage control method of a photovoltaic power supply system described in the first aspect.

In accordance with a third aspect of the present application, an embodiment provides a photovoltaic power supply system including the controller described in the second aspect.

In accordance with a fourth aspect of the present application, an embodiment provides a computer-readable storage medium storing computer-executable instructions which are configured to cause a computer to implement the voltage control method of a photovoltaic power supply system described in the first aspect.

The technical scheme of the embodiments of the present application includes, but not limited to, the following technical effects. First, the embodiments of the present application can flexibly adjust the target given voltage of the busbar based on the grid voltage and target power tracking voltage, allowing the system to obtain different suitable busbar given voltages under various conditions. Additionally, the embodiments of the present application can control the operating state of the DC converter according to the target given voltage in different conditions to reduce converter losses and thereby improving system efficiency. Therefore, the technical scheme of the embodiments of the present application enables the system to operate in the desired steady state under varying conditions.

Additional aspects and advantages of the present application will be set forth in part in the following description, and in part will be apparent from the following description, or may be learned by practice of the present application.

### BRIEF DESCRIPTION OF DRAWINGS

The accompanying drawings are used to provide further understanding of the technical schemes of the present application and constitute a part of the description. The accompanying drawings are used to explain the technical schemes of the present application together with the embodiments of the present application, and do not constitute a restriction on the technical schemes of the present application.
FIG. 1 is a schematic diagram of a system architecture platform for executing a voltage control method of a photovoltaic power supply system according to an embodiment of the present application;
FIG. 2 is a schematic diagram of a photovoltaic power supply system including one photovoltaic input apparatus according to an embodiment of the present application;
FIG. 3 is a schematic diagram of a photovoltaic power supply system including two photovoltaic input apparatuses according to an embodiment of the present application;
FIG. 4 is a schematic diagram of a photovoltaic power supply system including three or more photovoltaic input apparatuses according to an embodiment of the present application;
FIG. 5 is a flowchart of a voltage control method of a photovoltaic power supply system according to an embodiment of the present application;
FIG. 6 is a flowchart of a voltage control method of a photovoltaic power supply system according to another embodiment of the present application;
FIG. 7 is a flowchart of a voltage control method of a photovoltaic power supply system according to another embodiment of the present application;
FIG. 8 is a flowchart of a voltage control method of a photovoltaic power supply system according to another embodiment of the present application;
FIG. 9 is a flowchart of a voltage control method of a photovoltaic power supply system according to another embodiment of the present application;
FIG. 10 is a flowchart of a voltage control method of a photovoltaic power supply system according to another embodiment of the present application;
FIG. 11 is a flowchart of a voltage control method of a photovoltaic power supply system according to another embodiment of the present application;
FIG. 12 is a flowchart of a voltage control method of a photovoltaic power supply system according to another embodiment of the present application;
FIG. 13 is a flowchart of a voltage control method of a photovoltaic power supply system according to another embodiment of the present application;
FIG. 14 is a flowchart of a voltage control method of a photovoltaic power supply system according to another embodiment of the present application;
FIG. 15 is an overall flowchart of a voltage control method of a photovoltaic power supply system including one photovoltaic input apparatus according to an embodiment of the present application;
FIG. 16 is an overall flowchart of a voltage control method of a photovoltaic power supply system including two photovoltaic input apparatuses according to an embodiment of the present application; and
FIG. 17 is an overall flowchart of a voltage control method of a photovoltaic power supply system including two photovoltaic input apparatuses according to an embodiment of the present application.

### DETAILED DESCRIPTION

Embodiments of the present application will be discussed in detail below. Examples of the embodiments are illustrated in the accompanying drawings, where the same or like reference numerals throughout the figures indicate the same or like elements having the same or like functions. The embodiments described below with reference to the accompanying drawings are exemplary and are intended only to explain the present application instead of being construed as limiting the present application.

In the description of the present application, it should be understood that, descriptions relating to orientation, for example, orientation or positional relationships indicated by up, down, front, rear, left, right, etc. are based on the orientation or positional relationships shown in the accompanying drawings, and are to facilitate the description of the present application and simplify the description only, rather than indicating or implying that the device or element referred to must have a specific orientation or be constructed and operated in a specific orientation, and therefore cannot be construed as limiting the present application.

In the description of the present application, the meaning of "several" is one or a plurality; the meaning of "a plurality of" is two or more; "greater than", "less than", "more than", etc. are to be construed as excluding a given figure; and "above", "below", "within", etc. are to be construed as including a given figure. If "first" and "second", etc. are referred to, it is only for the purpose of distinguishing technical features, and shall not be construed as indicating or implying relative importance or implying the number of the indicated technical features or implying the sequence of the indicated technical features.

In the description of the present application, unless otherwise explicitly defined, the terms such as "arrange", "install", and "connect" should be construed in a broad sense, and those skilled in the art can determine the specific meanings of the above terms in the present application in a rational way in conjunction with the specific contents of the technical schemes.

In some cases, for photovoltaic power supply systems, the stability of energy flow can be achieved by stabilizing a voltage of a busbar. A stable voltage of the busbar signifies that the energy inflow and outflow of the system are balanced, so it is essential to control the voltage of the busbar in photovoltaic power supply systems. However, it is insufficient to merely maintain the stable voltage of the busbar. Because the desired voltage of the busbar for maintaining the system in its optimal steady state differs under various conditions, and the current designated voltage of the busbar is just a constant, the system cannot run in an optimal state.

In view of this, the embodiments of the present application provide a photovoltaic power supply system, a voltage control method thereof, a controller, and a computer-readable storage medium, which enable the system to achieve different suitable busbar given voltages under various conditions, and reduce converter losses appropriately in different situations, thereby improving system efficiency. Therefore, the technical scheme of the embodiments of the present application enables the system to operate in the optimal steady state under varying conditions.

The embodiments of the present application will be further explained below with reference to the accompanying drawings.

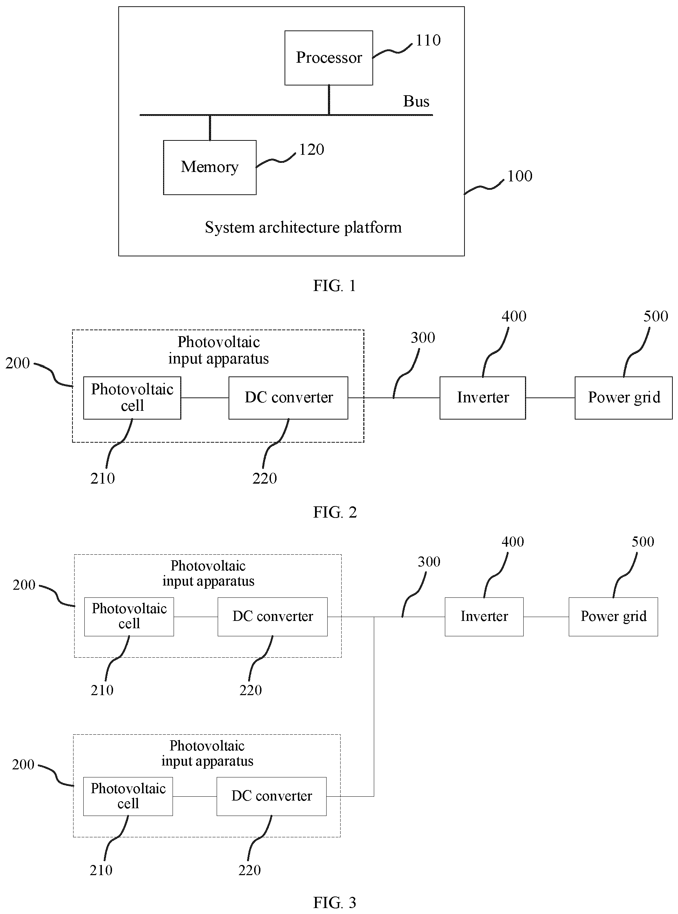

Referring to FIG. 1, it is a schematic diagram of a system architecture platform for executing a voltage control method of a photovoltaic power supply system according to an embodiment of the present application.

The system architecture platform 100 of the embodiment of the present application includes at least one processor 110 and memory 120. In an example illustrated in FIG. 1, one processor 110 and one memory 120 are shown.

The processor 110 and the memory 120 may be connected by a bus or in other ways. In an example illustrated in FIG. 1, the connection is realized by a bus.

As a non-transitory computer-readable storage medium, the memory 120 may be configured to store a non-transitory software program and a non-transitory computer-executable program. In addition, the memory 120 may include a high-speed random access memory and a non-transitory memory, for example, at least one magnetic disk storage device, a flash memory device, or another non-transitory solid-state storage device. In some implementations, the memory 120 may optionally include memory 120 remotely located with respect to the processor 110, and this remote memory may be connected to the system architecture platform 100 via a network. Examples of the above-mentioned network include, but are not limited to, the Internet, an intranet, a local area network, a mobile communication network, and a combination thereof.

It can be understood by those having ordinary skill in the art that the device structure shown in FIG. 1 does not constitute a limitation to the system architecture platform 100, and more or fewer components, or a combination of certain components, or a different component arrangement is possible.

In the system architecture platform 100 shown in FIG. 1, the processor 110 may be configured to call a voltage control program of the photovoltaic power supply system stored in the memory 120, thereby implementing the voltage control method of the photovoltaic power supply system.

Based on a hardware structure of the system architecture platform described above, various embodiments of the photovoltaic power supply system of the present application are proposed.

Refer to FIG. 2 which is a schematic diagram of a photovoltaic power supply system including one photovoltaic input apparatus according to an embodiment of the present application.

The photovoltaic power supply system provided in this embodiment of the present application includes, but not limited to, a photovoltaic input apparatus 200 and an inverter 400. Here, the photovoltaic input apparatus 200 includes, but not limited to, a photovoltaic cell 210 and a DC converter 220. The photovoltaic cell 210 is connected to an input side of the DC converter 220. An output side of the DC converter 220 is connected to an input side of the inverter 400 through a busbar 300, and an output side of the inverter 400 is connected to a power grid 500.

It should be noted that the photovoltaic cell 210 in the photovoltaic input apparatus 200 refers to a solar photovoltaic cell 210, which can directly convert solar energy into electrical energy. Here, the photovoltaic power supply system predominantly uses silicon-based solar photovoltaic cells 210, which may be specifically classified into monocrystalline silicon, polycrystalline silicon, and amorphous silicon solar photovoltaic cells 210.

Additionally, it should be noted that the DC converter 220 in the photovoltaic input apparatus 200 is a DC-DC converter, which is configured to change the voltage level of direct currents in a circuit. In some embodiments, the DC converter 220 may be classified into a boost DC-DC converter 220 and a buck DC-DC converter 220. When the DC converter 220 is a boost DC-DC converter 220, the DC converter 220 can step up an output voltage of the photovoltaic cell 210 to obtain a higher voltage for supplying to the busbar 300. When the DC converter 220 is a buck DC-DC converter 220, the DC converter 220 can step down the output voltage of the photovoltaic cell 210 to achieve a lower voltage for supplying to the busbar 300.

Additionally, it should be noted that the inverter 400 is a DC-AC converter. Since a supply current of the power grid 500 is alternating current, in order to adapt to the power grid 500, the embodiment requires a DC-AC converter to convert DC power from the busbar 300 into AC power, which is then supplied to the power grid 500. Here, the inverter 400 may consist of an inverter bridge, control logic, and a filtering circuit.

It is worth noting that the photovoltaic power supply system in this embodiment also includes, but not limited to, a controller, which may include, but not limited to, the processor and memory as shown in FIG. 1. The controller may be connected to the photovoltaic cell 210, the DC converter 220, the inverter 400, and the power grid 500, so as to detect the current states of the photovoltaic cell 210 and the power grid 500, as well as to control the DC converter 220 and the inverter 400.

Further, as shown in FIG. 3, it is a schematic diagram of a photovoltaic power supply system including two photovoltaic input apparatuses 200 according to an embodiment of the present application.

The structural difference between the photovoltaic power supply system in FIG. 3 and the photovoltaic power supply system in FIG. 2 is that: the photovoltaic power supply system in FIG. 3 includes two photovoltaic input apparatuses 200, while the photovoltaic power supply system in FIG. 2 includes only one photovoltaic input apparatus 200.

The implementation and technical effect of the photovoltaic power supply system in FIG. 3 may be referred to the specific implementation and technical effect of the photovoltaic power supply system in FIG. 2 described above.

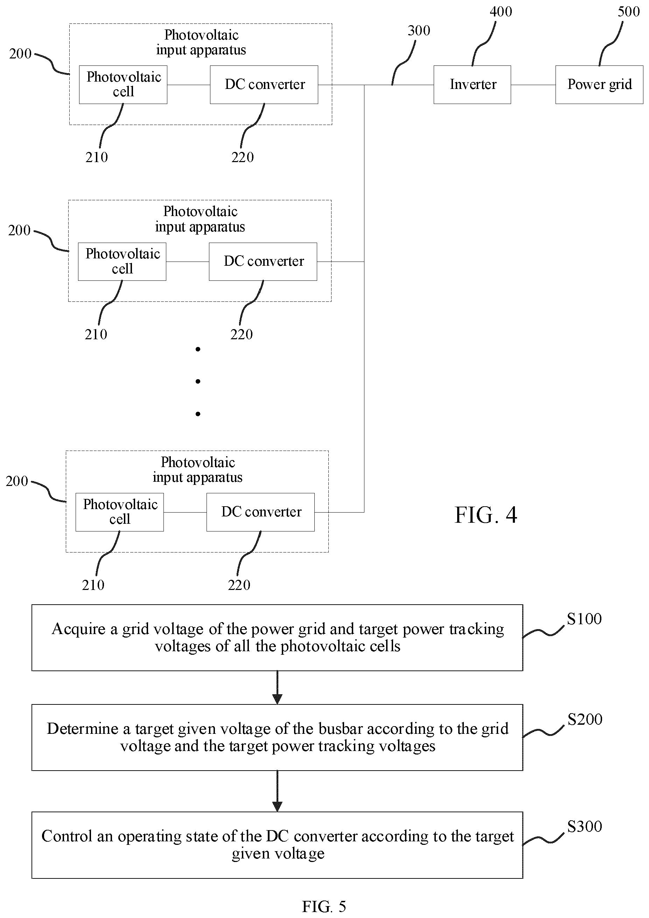

Further, as shown in FIG. 4, it is a schematic diagram of a photovoltaic power supply system including three or more photovoltaic input apparatuses 200 according to an embodiment of the present application.

The structural difference between the photovoltaic power supply system in FIG. 4 and the photovoltaic power supply systems in FIGS. 2 and 3 is that: the photovoltaic power supply system in FIG. 4 includes three or more photovoltaic input apparatuses 200, the photovoltaic power supply system in FIG. 2 includes only one photovoltaic input apparatus 200, and the photovoltaic power supply system in FIG. 3 includes two photovoltaic input apparatuses 200.

The implementation and technical effect of the photovoltaic power supply system in FIG. 4 may be referred to the specific implementation and technical effect of the photovoltaic power supply systems in FIGS. 2 and 3 described above.

Based on hardware structures of the system architecture platform and photovoltaic power supply system described above, various embodiments of a voltage control method of a photovoltaic power supply system of the present application are proposed.

As shown in FIG. 5, it is a flowchart of a voltage control method of a photovoltaic power supply system according to an embodiment of the present application. The voltage control method is applicable to the photovoltaic power supply system shown in FIGS. 2 to 4. The photovoltaic power supply system includes, but not limited to, an inverter and at least one photovoltaic input apparatus. Each photovoltaic input apparatus includes a photovoltaic cell and a DC converter. The photovoltaic cell is connected to the input side of the inverter through the DC converter and the busbar sequentially, and an output side of the inverter is connected to a power grid. The voltage control method includes, but not limited to, a step S100, a step S200, and a step S300.

At the step S100, a grid voltage of the power grid and a target power tracking voltage of each of all the photovoltaic cells are acquired.

In an embodiment, due to fluctuations in the grid voltage of the power grid, that is, the grid voltage of the power grid may vary at different states or times, it is necessary to obtain the current grid voltage of the power grid.

It can be understood that this embodiment may use a voltage sampling apparatus to collect the current grid voltage of the power grid. The specific circuit structure of the voltage sampling apparatus is not specifically limited in this embodiment.

In an embodiment, the target power tracking voltage may either be a maximum power tracking voltage or a power tracking voltage lower than the maximum power tracking voltage, which is not specifically limited in this embodiment. For example, in response to the target power tracking voltage being the maximum power tracking voltage, since a maximum power value of the photovoltaic cell varies in different environments, the maximum power tracking voltage also varies accordingly. Therefore, it is necessary to obtain the maximum power tracking voltage of the photovoltaic cell under the current environmental conditions.

At the step S200, a target given voltage of the busbar is determined according to the grid voltage and the target power tracking voltages.

In an embodiment, since voltage levels of the grid voltage and the target power tracking voltage can affect the busbar given voltage, this embodiment can accurately determine the target given voltage of the busbar according to the grid voltage and the target power tracking voltage.

It should be noted that a specific process of determining the target given voltage of the busbar according to the grid voltage and the target power tracking voltage can be achieved by inputting the grid voltage and the target power tracking voltage into a calculation formula to compute the target given voltage of the busbar, or by referencing a lookup table based on the grid voltage and the target power tracking voltage, or by inputting the grid voltage and the target power tracking voltage into a trained neural network model. Other methods may also be employed to determine the target given voltage of the busbar, which is not specifically limited in this embodiment.

At the step S300, an operating state of the DC converter is controlled according to the target given voltage.

In an embodiment, once the target given voltage of the bus is determined, the operating state of the DC converter may be controlled to ensure that the output voltage from each photovoltaic input apparatus to the busbar equals or closely approaches the target given voltage.

It should be noted that the operating state of the DC converter may be an off state or an operational state, among others. For photovoltaic input apparatuses where the output voltage of the photovoltaic cell equals to or is close to the target given voltage, the corresponding DC converters may be turned off to reduce converter losses. Additionally, for photovoltaic input apparatuses where the output voltage of the photovoltaic cell is significantly below the target given voltage, the corresponding DC converters must be controlled to keep operating to achieve voltage boosting.

According to the technical scheme of the step S100, the step S200, and the step S300, the embodiment of the present application can flexibly adjust the target given voltage of the busbar based on the grid voltage and target power tracking voltage, so that the system obtains different suitable busbar given voltages under various conditions. Additionally, the embodiment of the present application can control the operating state of the DC converter according to the target given voltage in different conditions to reduce converter losses, thereby improving system efficiency. Therefore, the technical scheme of the embodiment of the present application enables the system to operate in the optimal steady state under varying conditions.

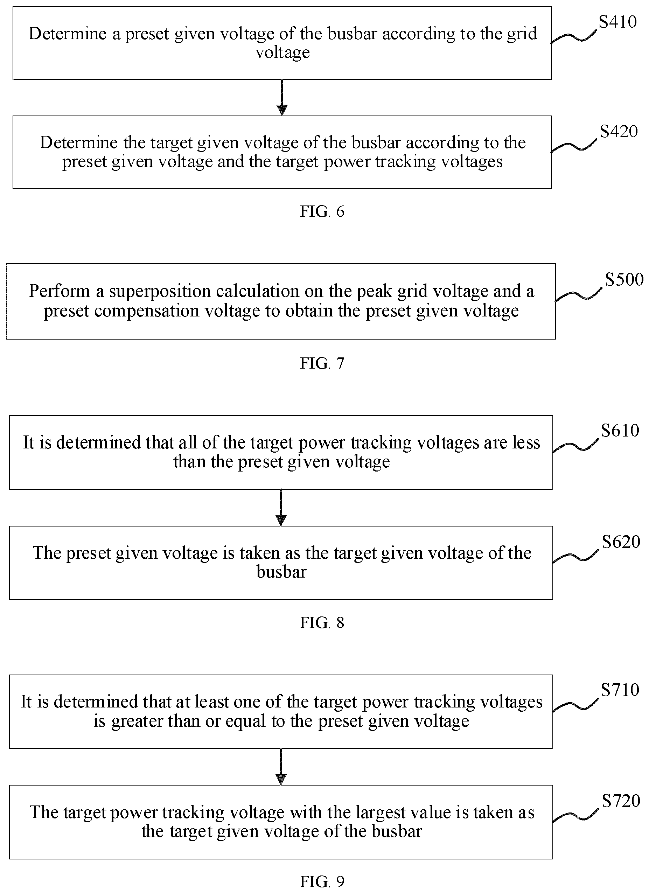

Further, as shown in FIG. 6, it is a flowchart of a voltage control method of a photovoltaic power supply system according to another embodiment of the present application. The above step S200 includes, but not limited to, a step S410 and a step S420.

At the step S410, a preset given voltage of the busbar is determined according to the grid voltage.

At the step S420, the target given voltage of the busbar is determined according to the preset given voltage and the target power tracking voltages.

Since both the voltage level of the grid voltage and the voltage level of the target power tracking voltage will affect the given voltage of the bus, the embodiment of the present application may first determine a preset given voltage of the busbar according to the grid voltage, and then determine the target given voltage of the busbar according to the target power tracking voltages and the preset given voltage.

It should be noted that a specific process of determining the preset given voltage of the busbar according to the grid voltage can be achieved by inputting the grid voltage into a calculation formula to compute the preset given voltage of the bus, or by referencing a lookup table based on the grid voltage, or by inputting the grid voltage into a trained neural network model. Other methods may also be employed to determine the preset given voltage of the busbar, which is not specifically limited in this embodiment.

In an embodiment, the higher the grid voltage is, the higher the corresponding preset given voltage of the busbar is; *vice versa,* the lower the grid voltage is, the lower the corresponding preset given voltage of the busbar is.

Additionally, it should be noted that a specific process of determining the target given voltage of the busbar according to the target power tracking voltages and the preset given voltage can be achieved by inputting the target power tracking voltages and the preset given voltage into a calculation formula to compute the target given voltage of the busbar, or by referencing a lookup table based on the target power tracking voltages and the preset given voltage, or by inputting the target power tracking voltages and the preset given voltage into a trained neural network model. Other methods may also be employed to determine the target given voltage of the busbar, which is not specifically limited in this embodiment.

In an embodiment, the preset given voltage may be compared with the target power tracking voltages, and then the target given voltage of the busbar is determined based on comparison results.

Further, as shown in FIG. 7, it is a flowchart of a voltage control method of a photovoltaic power supply system according to another embodiment of the present application. In response to the grid voltage being a peak grid voltage, the step S410 includes, but not limited to, a step S500.

At the step S500, a superposition calculation is performed on the peak grid voltage and a preset compensation voltage to obtain the preset given voltage.

In an embodiment, the busbar voltage has to pass through the inverter before being supplied to the power grid, and the inverter introduces certain voltage losses, so a compatibility between the voltage supplied to the power grid and the grid voltage of the power grid requires voltage compensation. In other words, a certain preset compensation voltage may be added to the peak grid voltage to offset the voltage losses caused by the inverter.

It should be noted that the voltage losses associated with the inverter may include, but not limited to, inverter dead times, tube voltage drops, and filter inductor voltage drops, which is not specifically limited in this embodiment.

It is understood that the preset compensation voltage may either be preconfigured or set according to current system parameters, which is not specifically limited in this embodiment.

Additionally, it should be noted that determining the target given voltage of the busbar according to the preset given voltage and the target power tracking voltages in the step S420 may include, but not limited to, two implementation scenarios shown in FIGS. 8 and 9, detailed as follows.

As shown in FIG. 8, it is a flowchart of a voltage control method of a photovoltaic power supply system according to another embodiment of the present application. The above step S420 includes, but not limited to, a step S610 and step a S620.

At the step S610, it is determined that all of the target power tracking voltages are less than the preset given voltage.

At the step S620, the preset given voltage is taken as the target given voltage of the busbar.

As shown in FIG. 9, it is a flowchart of a voltage control method of a photovoltaic power supply system according to another embodiment of the present application. The above step S420 includes, but not limited to, a step S710 and a step S720.

At the step S710, it is determined that at least one of the target power tracking voltages is greater than or equal to the preset given voltage.

At the step S720, the target power tracking voltage with the largest value is taken as the target given voltage of the busbar.

Based on the steps in FIGS. 8 and 9, the preset given voltage may be compared with all the target power tracking voltages, and then the target given voltage of the busbar is determined based on comparison results. When all of the target power tracking voltages are less than the preset given voltage, it means that none of the target power tracking voltages can meet the preset given voltage. In this case, the preset given voltage is taken as the target given voltage of the busbar to meet system requirements. When one or more of the target power tracking voltages are greater than or equal to the preset given voltage, it indicates that some of the target power tracking voltages can meet the preset given voltage. In this case, the target power tracking voltage with the largest value is taken as the target given voltage of the busbar.

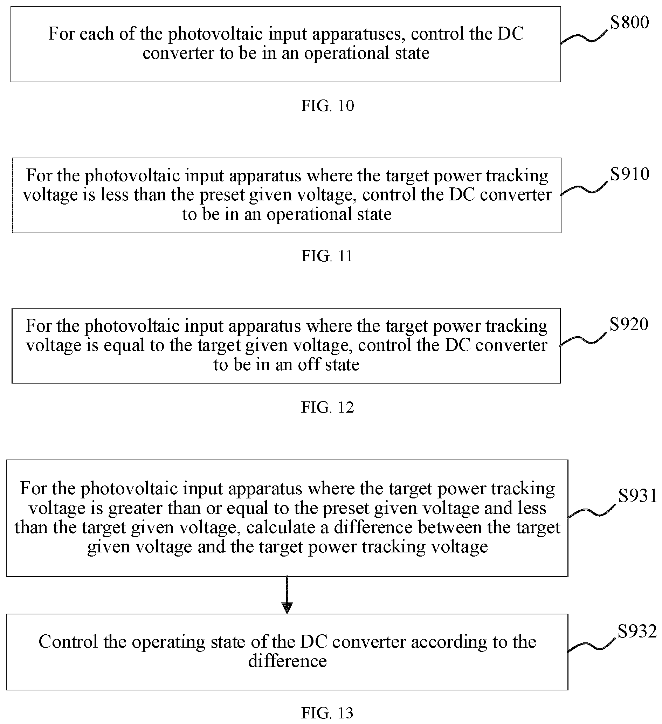

Further, as shown in FIG. 10, it is a flowchart of a voltage control method of a photovoltaic power supply system according to another embodiment of the present application. In the implementation scenario of FIG. 8, the step S300 includes, but not limited to, a step S800.

At the step S800, for each of the photovoltaic input apparatuses, the DC converter is controlled to be in an operational state.

In an embodiment, all of the target power tracking voltages are less than the preset given voltage, it means that none of the target power tracking voltages can meet the preset given voltage. In this scenario, it is necessary to control all the DC converters to operate to boost each of the target power tracking voltages, so that the output voltage from the photovoltaic input apparatuses to the busbar meets the preset given voltage.

Additionally, it should be noted that in the implementation scenario of FIG. 9, controlling the operating state of the DC converter according to the target given voltage in the step S300 may include, but not limited to, three implementation scenarios in FIGS. 11, 12, and 13, detailed as follows.

As shown in FIG. 11, it is a flowchart of a voltage control method of a photovoltaic power supply system according to another embodiment of the present application. In the implementation scenario of FIG. 9, the above step S300 includes, but is not limited to, a step S910.

At the step S910, for the photovoltaic input apparatus where the target power tracking voltage is less than the preset given voltage, the DC converter is controlled to be in an operational state.

In an embodiment, in response to one or more of the target power tracking voltages being greater than or equal to the preset given voltage, and the target power tracking voltage with the largest value being selected as the target given voltage of the busbar, for the photovoltaic input apparatus where the target power tracking voltage is less than the preset given voltage, since the target power tracking voltage cannot meet the target given voltage, it is necessary to control the corresponding DC converter to operate to boost the target power tracking voltage, so that the output voltage from the photovoltaic input apparatus where the target power tracking voltage is less than the preset given voltage to the busbar meets the target given voltage.

As shown in FIG. 12, it is a flowchart of a voltage control method of a photovoltaic power supply system according to another embodiment of the present application. In the implementation scenario of FIG. 9, the above step S300 includes, but not limited to, a step S920.

At the step S920, for the photovoltaic input apparatus where the target power tracking voltage is equal to the target given voltage, the DC converter is controlled to be in an off state.

In an embodiment, in response to one or more of the target power tracking voltages being greater than or equal to the preset given voltage, and the target power tracking voltage with the largest value being selected as the target given voltage of the bus, for the photovoltaic input apparatus where the target power tracking voltage is equal to the target given voltage, since the target power tracking voltage can meet the target given voltage, the corresponding DC converter can be turned off, thereby achieving the goal of reducing converter losses.

As shown in FIG. 13, it is a flowchart of a voltage control method of a photovoltaic power supply system according to another embodiment of the present application. In the implementation scenario of FIG. 9, the above step S300 includes, but not limited to, a step S931 and a step S932.

At the step S931, for the photovoltaic input apparatus where the target power tracking voltage is greater than or equal to the preset given voltage and less than the target given voltage, a difference between the target given voltage and the target power tracking voltage is calculated.

At the step S932, the operating state of the DC converter is controlled according to the difference.

In an embodiment, in response to one or more of the target power tracking voltages being greater than or equal to the preset given voltage, and the target power tracking voltage with the largest value being selected as the target given voltage of the busbar, for the photovoltaic input apparatus where the target power tracking voltage is greater than or equal to the preset given voltage and less than the target given voltage, if the target power tracking voltage differs significantly from the target given voltage, it indicates that the target power tracking voltage cannot meet the target given voltage. In this case, it is necessary to control the corresponding DC converter to operate to boost the target power tracking voltage, so that the output voltage from the photovoltaic input apparatus to the busbar can approach or equal the target given voltage. If the target power tracking voltage differs slightly from the target given voltage, it indicates that the target power tracking voltage can meet the target given voltage. In this case, the corresponding DC converter can be turned off, thereby achieving the goal of reducing converter losses.

In an embodiment, for the step S932, the difference between the target given voltage and the target power tracking voltage can be calculated first, and in response to the difference being less than a preset value, the DC converter is controlled to be in an off state. In response to the difference being greater than or equal to the preset value, the DC converter is controlled to be in an operational state.

It should be understood that the preset value may be set in advance.

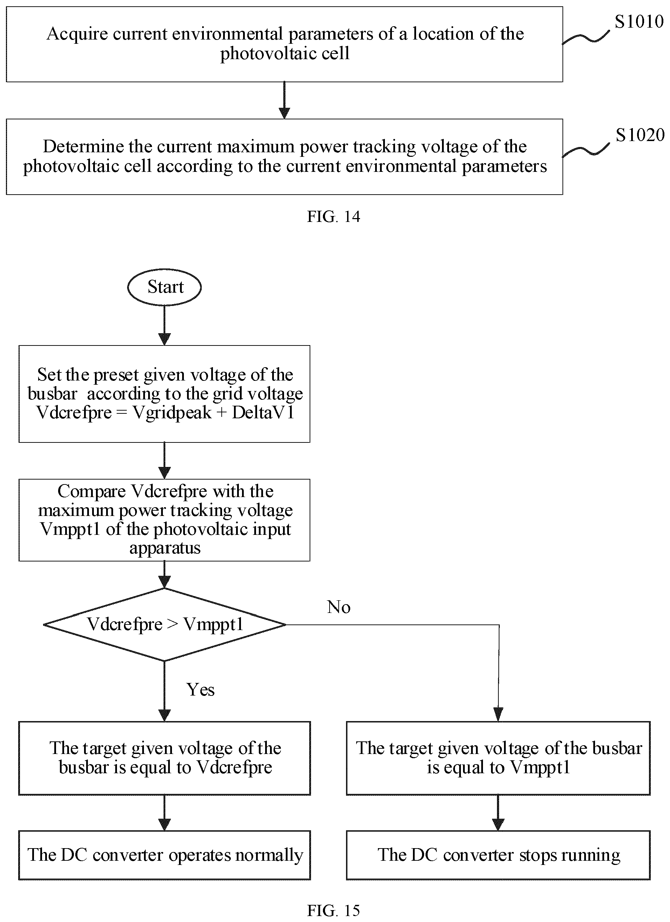

Further, as shown in FIG. 14, it is a flowchart of a voltage control method of a photovoltaic power supply system according to another embodiment of the present application. The target power tracking voltage may be a current maximum power tracking voltage of the photovoltaic cell. Here, an acquisition of the maximum power tracking voltage may include, but not limited to, a step S1010 and a step S1020.

At the step S1010, one or more current environmental parameters of a location of the photovoltaic cell are acquired.

At the step S1020, the current maximum power tracking voltage of the photovoltaic cell is determined according to the current environmental parameters.

In an embodiment, since the environmental parameters affect the maximum power tracking voltage of the photovoltaic cell, that is, different current environmental parameters correspond to different maximum power tracking voltages, it is necessary to obtain the current environmental parameters of the location of the photovoltaic cell and then the current maximum power tracking voltage of the photovoltaic cell is determined according to the current environmental parameters.

It should be noted that the current environmental parameters may be light intensity, ambient temperature or other parameters, which are not specifically limited in this embodiment.

Additionally, it should be noted that a specific process of obtaining the maximum power tracking voltage based on the current environmental parameters can be achieved by inputting the current environmental parameters into a calculation formula to compute the maximum power tracking voltage, or by referencing a lookup table based on the current environmental parameters, or by inputting the current environmental parameters into a trained neural network model. Other methods may also be employed to obtain the maximum power tracking voltage, which is not specifically limited in this embodiment.

Based on the various embodiments of the voltage control method of the photovoltaic power supply system mentioned above, comprehensive embodiments of the voltage control method of the photovoltaic power supply system in the present application will be proposed below.

As shown in FIG. 15, it is an overall flowchart of a voltage control method of a photovoltaic power supply system including one photovoltaic input apparatus according to an embodiment of the present application.

In an embodiment, in the case of the photovoltaic power supply system including only one photovoltaic input apparatus in FIG. 2, the preset given voltage of the busbar is set first according to the grid voltage, i.e., Vdcrefpre = Vgridpeak + DeltaV1, where Vgridpeak refers to the peak grid voltage, and DeltaV1 refers to the preset compensation voltage added on the basis of the peak grid voltage. The purpose of the preset compensation voltage, typically ranging from 2 V to 50 V, is a compensation for the inverter dead times, tube voltage drops, and filter inductor voltage drops, etc., so that the harmonics of the grid-connected current remain low. The preset given voltage Vdcrefpre is then compared with the maximum power tracking voltage Vmppt1 of the photovoltaic input apparatus. In response to Vdcrefpre > Vmppt1, the target given voltage of the busbar is equal to Vdcrefpre, and the DC converter connected to the photovoltaic cell operates normally, thereby allowing the system to function with the lowest possible busbar voltage, which ultimately reduces switching losses of the converter and improves system efficiency. In response to Vdcrefpre ≤ Vmppt1, the target given voltage of the busbar is equal to Vmppt1, and the DC converter connected to the photovoltaic cell stops running, so that the energy from the photovoltaic cell flows directly to the busbar without passing through the DC converter. This reduces the losses of the DC converter and improves system efficiency.

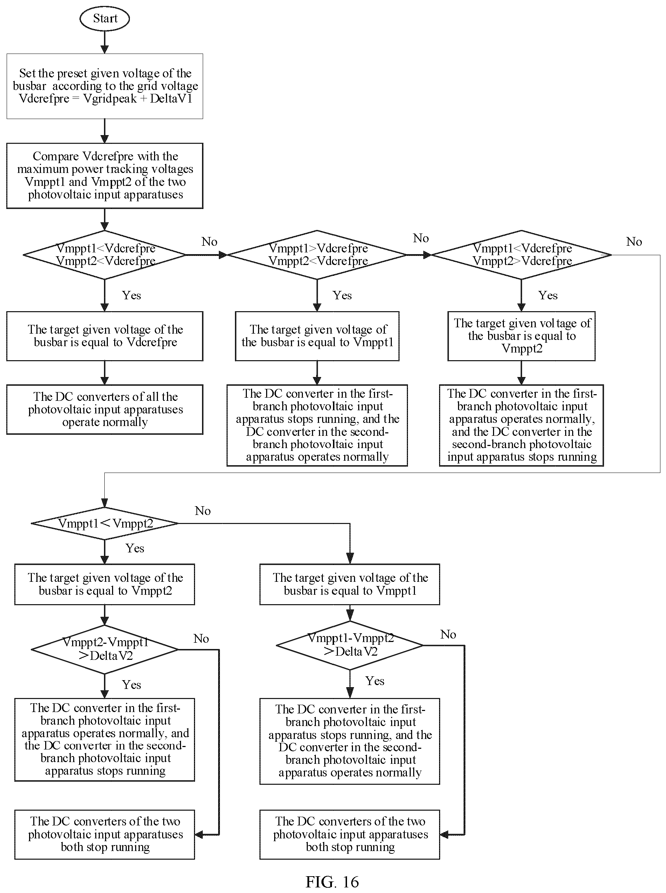

As shown in FIG. 16, it is an overall flowchart of a voltage control method of a photovoltaic power supply system including two photovoltaic input apparatuses according to an embodiment of the present application.

In an embodiment, in the case of the photovoltaic power supply system including two photovoltaic input apparatuses in FIG. 3, the preset given voltage of the busbar is set first according to the grid voltage, i.e., Vdcrefpre = Vgridpeak + DeltaV1 , where Vgridpeak refers to the peak grid voltage, and DeltaV1 refers to the preset compensation voltage added on the basis of the peak grid voltage. The purpose of the preset compensation voltage, typically ranging from 2 V to 50 V, is a compensation for the inverter dead times, tube voltage drops, and filter inductor voltage drops, etc., so that the harmonics of the grid-connected current remain low. Then, the preset given voltage Vdcrefpre is compared with the maximum power tracking voltages Vmppt1 and Vmppt2 of the two photovoltaic input apparatuses. In response to Vmppt1 < Vdcrefpre and Vmppt2 < Vdcrefpre, the target given voltage of the busbar is equal to Vdcrefpre, and the DC converters of all the photovoltaic input apparatuses operate normally. In response to Vmppt1 > Vdcrefpre and Vmppt2 < Vdcrefpre, the target given voltage of the busbar is equal to Vmppt1, the DC converter in the first-branch photovoltaic input apparatus stops running, so that the energy from the photovoltaic cell flows directly to the busbar without passing through the DC converter, and the DC converter in the second-branch photovoltaic input apparatus operates normally. In response to Vmppt1 < Vdcrefpre and Vmppt2 > Vdcrefpre, the target given voltage of the busbar is equal to Vmppt2, the DC converter in the second-branch photovoltaic input apparatus stops running, so that the energy from the photovoltaic cell flows directly to the bus without passing through the DC converter, and the DC converter in the first-branch photovoltaic input apparatus operates normally. In response to both Vmppt1 and Vmppt2 of the two photovoltaic input apparatuses being greater than Vdcrefpre, Vmppt1 and Vmppt2 are compared. In response to Vmppt1 being larger, the target given voltage of the busbar is equal to Vmppt1. Further, it is necessary to calculate a difference between Vmppt1 and Vmppt2. In response to a small difference, the DC converters of the two photovoltaic input apparatuses both stop running. In response to a large difference, the DC converter in the first-branch photovoltaic input apparatus stops running, and the DC converter in the second-branch photovoltaic input apparatus operates normally. In response to Vmppt2 being larger, the target given voltage of the busbar is equal to Vmppt2. Similarly, the operating state of the DC converter in each photovoltaic input apparatus is determined based on the difference.

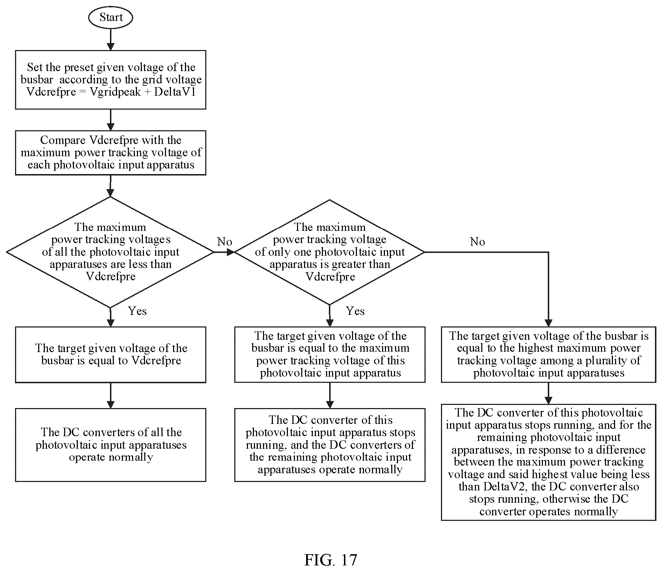

As shown in FIG. 17, it is an overall flowchart of a voltage control method of a photovoltaic power supply system including three or more photovoltaic input apparatuses according to an embodiment of the present application.

In an embodiment, in the case of the photovoltaic power supply system including three or more photovoltaic input apparatuses in FIG. 4, the preset given voltage of the busbar is set first according to the grid voltage, i.e., Vdcrefpre = Vgridpeak + DeltaV1, where Vgridpeak refers to the peak grid voltage, and DeltaV1 refers to the preset compensation voltage added on the basis of the peak grid voltage. The purpose of the preset compensation voltage, typically ranging from 2 V to 50 V, is a compensation for the inverter dead times, tube voltage drops, and filter inductor voltage drops, etc., so that the harmonics of the grid-connected current remain low. Then, the preset given voltage Vdcrefpre is compared with the maximum power tracking voltage of each photovoltaic input apparatus. In response to the maximum power tracking voltages of all the photovoltaic input apparatuses being less than Vdcrefpre, the target given voltage of the busbar is equal to Vdcrefpre, and the DC converters of all the photovoltaic input apparatuses operate normally. In response to the maximum power tracking voltage of a certain photovoltaic input apparatus being greater than Vdcrefpre, the target given voltage of the busbar is equal to the maximum power tracking voltage of the photovoltaic input apparatus, the DC converter of the photovoltaic input apparatus stops running, so that the energy from the photovoltaic cell flows directly to the bus without passing through the DC converter, and the DC converters of the remaining photovoltaic input apparatuses operate normally. In response to the maximum power tracking voltages of a plurality of photovoltaic input apparatuses being greater than Vdcrefpre, the target given voltage of the busbar is equal to the highest maximum power tracking voltage among the plurality of photovoltaic input apparatuses, and the DC converter of this photovoltaic input apparatus stops running. For the remaining photovoltaic input apparatuses, in response to a difference between the maximum power tracking voltage and said highest value being less than DeltaV2, the DC converter also stops running, otherwise the DC converter operates normally.

Based on the system architecture platform, the photovoltaic power supply system, and the voltage control method of the photovoltaic power supply system described above, various embodiments of a controller and a computer-readable storage medium of the present application are presented below.

In addition, an embodiment of the present application provides a controller, including: a processor, a memory, and a computer program stored in the memory and operable on the processor.

The processor and the memory may be connected by a bus or by other means.

It should be noted that the controller in this embodiment may include the processor and the memory as in the embodiment shown in FIG. 1. They belong to the same inventive concept, so both of them have identical implementation principles and beneficial effects, which will not be repeated here.

The memory stores the non-transitory software program and instructions required for realizing the voltage control method of the photovoltaic power supply system in the above embodiment, which, when executed by the processor, implement the voltage control method of the photovoltaic power supply system in the above embodiment.

According to the technical scheme of the controller in the embodiments of the present application, the embodiments of the present application can flexibly adjust the target given voltage of the busbar based on the grid voltage and target power tracking voltage, so that the system is able to obtain different suitable busbar given voltages under various conditions. Additionally, the embodiment of the present application can control the operating state of the DC converter according to the target given voltage in different conditions to reduce converter losses, thereby improving system efficiency. Therefore, the technical scheme of the embodiment of the present application enables the system to operate in the optimal steady state under varying conditions.

It is worth noting that since the controller in this embodiment of the present application can implement the voltage control method of the photovoltaic power supply system in the above embodiment, the specific implementation and technical effects of the controller in this embodiment of the present application can be referred to the specific implementation and technical effects of the voltage control method of the photovoltaic power supply system in any of the above embodiments.

Furthermore, an embodiment of the present application also provides a computer-readable storage medium storing computer-executable instructions which are configured to cause a computer to implement the voltage control method of the photovoltaic power supply system, for example, execute the method in FIGS. 5 to 17 described above.

According to the technical scheme of the computer-readable storage medium in the embodiments of the present application, the embodiments of the present application can flexibly adjust the target given voltage of the busbar based on the grid voltage and target power tracking voltage, so that the system is able to obtain different suitable bus given voltages under various conditions. Additionally, the embodiment of the present application can control the operating state of the DC converter according to the target given voltage in different conditions to reduce converter losses, thereby improving system efficiency. Therefore, the technical scheme of the embodiment of the present application enables the system to operate in the optimal steady state under varying conditions.

It is worth noting that since the computer-readable storage medium in this embodiment of the present application can implement the voltage control method of the photovoltaic power supply system in the above embodiment, the specific implementation and technical effects of the computer-readable storage medium in this embodiment of the present application can be referred to the specific implementation and technical effects of the voltage control method of the photovoltaic power supply system in any of the above embodiments.

It can be understood by those having ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on computer-readable media, which may include computer-readable storage media (or non-transitory media) and communication media (or transitory media). As well known to those of ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to random access memory (RAM), read-only memory (ROM), electrically erasable programmable read-only memory (EEPROM), flash memory or other memory techniques, a compact disc read-only memory (CD-ROM), digital versatile disk (DVD) or other optical disk storage, magnetic cassette, magnetic tape, magnetic disk storage or other magnetic storage devices, or any other medium that can be used to store desired information and can be accessed by a computer. Furthermore, it is well known to those having ordinary skill in the art that communication media typically contain computer-readable instructions, data structures, program modules or other data in a modulated data signal such as a carrier wave or other transmission mechanism, and can include any information delivery media.

The above is a detailed description of preferable embodiments of the present application. However, the present application is not limited to the above-mentioned embodiments. Those having ordinary skill in the art can also make various equivalent modifications or replacements without departing from the nature of the present application, and these equivalent modifications or replacements are all included in the scope defined by the claims of the present application.

## Claims

1. A voltage control method of a photovoltaic power supply system, wherein the photovoltaic power supply system comprises an inverter and at least one photovoltaic input apparatus, each photovoltaic input apparatus comprises a photovoltaic cell and a DC converter, the photovoltaic cell is connected to an input side of the inverter through the DC converter and a busbar sequentially, and an output side of the inverter is connected to a power grid; and
the voltage control method comprises:
acquiring a grid voltage of the power grid and a target power tracking voltage of each of all the photovoltaic cells;
determining a target given voltage of the busbar according to the grid voltage and the target power tracking voltage; and
controlling an operating state of the DC converter according to the target given voltage.

2. The voltage control method of claim 1, wherein said determining a target given voltage of the busbar according to the grid voltage and the target power tracking voltage comprises:
determining a preset given voltage of the busbar according to the grid voltage; and
determining the target given voltage of the busbar according to the preset given voltage and the target power tracking voltage.

3. The voltage control method of claim 2, wherein the grid voltage comprises a peak grid voltage; and
said determining a preset given voltage of the busbar according to the grid voltage comprises:
performing a superposition calculation on the peak grid voltage and a preset compensation voltage to obtain the preset given voltage.

4. The voltage control method of claim 2, wherein said determining the target given voltage of the busbar according to the preset given voltage and the target power tracking voltages comprises at least one of:
in response to all of the target power tracking voltages being less than the preset given voltage, taking the preset given voltage as the target given voltage of the busbar; or
in response to at least one of the target power tracking voltages being greater than or equal to the preset given voltage, taking the target power tracking voltage with the largest value as the target given voltage of the busbar.

5. The voltage control method of claim 4, wherein in response to all of the target power tracking voltages being less than the preset given voltage, said controlling an operating state of the DC converter according to the target given voltage comprises:
controlling the DC converter to be in an operational state for each of the photovoltaic input apparatuses.

6. The voltage control method of claim 4, wherein in response to at least one of the target power tracking voltages being greater than or equal to the preset given voltage, said controlling an operating state of the DC converter according to the target given voltage comprises at least one of:
controlling the DC converter to be in an operational state for the photovoltaic input apparatus where the target power tracking voltage is less than the preset given voltage;
controlling the DC converter to be in an off state for the photovoltaic input apparatus where the target power tracking voltage is equal to the target given voltage; or
calculating a difference between the target given voltage and the target power tracking voltage, and controlling the operating state of the DC converter according to the difference for the photovoltaic input apparatus where the target power tracking voltage is greater than or equal to the preset given voltage and less than the target given voltage.

7. The voltage control method of claim 6, wherein in response to controlling an operating state of the DC converter according to the target given voltage comprising controlling the operating state of the DC converter according to the difference, said controlling the operating state of the DC converter according to the difference comprises at least one of:
in response to the difference being less than a preset value, controlling the DC converter to be in an off state; or
in response to the difference being greater than or equal to the preset value, controlling the DC converter to be in an operational state.

8. The voltage control method of any one of claims 1 to 7, wherein the target power tracking voltage is a current maximum power tracking voltage of the photovoltaic cell.

9. The voltage control method of claim 8, wherein an acquisition of the maximum power tracking voltage comprises:
acquiring a current environmental parameter of a location of the photovoltaic cell; and
determining the current maximum power tracking voltage of the photovoltaic cell according to the current environmental parameter.

10. A controller, comprising a memory, a processor, and a computer program stored in the memory and operable on the processor, wherein the processor, when executing the computer program, implements the voltage control method of a photovoltaic power supply system of any one of claims 1 to 9.

11. A photovoltaic power supply system, comprising the controller according to claim 10.

12. A computer-readable storage medium storing computer-executable instructions, wherein the computer-executable instructions are configured to cause a computer to implement the voltage control method of a photovoltaic power supply system of any one of claims 1 to 9.
